# EUROPEAN PATENT APPLICATION

(11) **EP 1 770 932 A1**
(43) Date of publication of application: **04.04.2007**
(21) Application number: 05256124.8
(22) Date of filing: 29.09.2005
(51) Int. Cl.: H04L 12/58, H04L 29/06

(54) **Method and apparatus for message forwarding**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

The invention provides apparatus and methods for sending a message from a first party, the message being destined for a second party. The method comprises the steps of obtaining presence information relating to the second party and accessing one or more data sources containing additional information associated with second party. An alternative recipient for the message is then determined based on the additional information. Forwarding instructions are automatically generated and the message is encapsulated. The encapsulated message and the forwarding instructions are then sent to the alternative recipient. The forwarding instructions include information to enable the second party to de-encapsulate the message.

To be accompanied, when published, by Figure 3 of the accompanying drawings.

## Description

### Technical Field

The present invention relates to a method of ad hoc communication. It is particularly related to, but in no way limited to, delivery of messages and establishment of calls between users connected to a communication network.

### Background

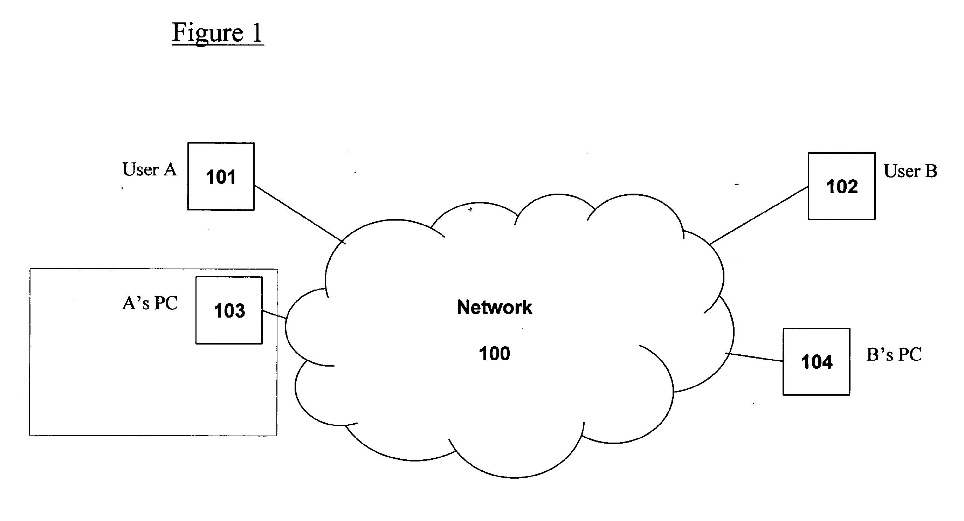

Figure 1 shows a schematic diagram of a communications network 100 and two users, referred to as user A and user B, connected to the network by mobile phones 101, 102. When both user A and user B are connected to the network, as shown, user A can initiate a call to user B or send a message to user B's mobile phone 102. However, if user B's mobile phone moves out of range of the network, runs out of battery power or account credit, or is switched off by user B, then user A cannot call user B. User A may instead be able to leave a voicemail for user B or send user B a text message (e.g. using the Short Message Service, SMS), however user A has no certainty when or if the message will reach user B.

In another example, users A and B may often communicate using an Instant Messenger (IM) application on their computers 103, 104, such as MSN Messenger. If user B is off line, although user A can send a message to user B, user A does not know when or if user B will receive the message.

In another example, user B is uncontactable for prolonged periods of time (e.g. away on a business trip) with limited or no access to their usual modes of communication (e.g., electronic e-mail, Instant Messenger, mobile communication), and is moving between a plurality of locations. It is difficult to ensure any messages are forwarded in a timely manner to B at each location, and only messages whose contents can be revealed to the party holding the message for B at each location may be sent. This is problematic if sensitive information needs to be sent to B in a timely manner.

This inability to contact a user can be particularly problematic when the message is important and / or urgent.

The invention seeks to provide an improved method and apparatus for communication between users which mitigates problems of known methods.

A first aspect provides a method of sending a message from a first party, the message being destined for a second party, the method comprising the steps of: obtaining presence information relating to the second party; accessing one or more data sources containing additional information associated with second party; determining an alternative recipient for the message based on the additional information; automatically generating instructions for forwarding the message from the alternative recipient to the second party; encapsulating the message; and sending the encapsulated message and the forwarding instructions to the alternative recipient, wherein the forwarding instructions include information to enable the second party to de-encapsulate the message.

Advantageously, this allows a message to be sent to someone who is uncontactable directly by the sender. This may be particularly advantageous where the message is important or time critical. The encapsulated message is accessible by the original intended recipient, thereby enabling a secure mode of communication to be provided which is automatically determined according to the intended recipient's presence information.

Preferably the step of determining an alternative recipient comprises the steps of: determining a set of possible alternative recipients based on the additional information; and selecting one or more alternative recipients from the set of possible alternative recipients.

Preferably the step of selecting one or more alternative recipients is based on at least one of presence information, location information, historic activity records, user device capabilities and user contact information.

Preferably the step of selecting one or more alternative recipients comprises the steps of: accessing a data source containing additional information relating to one or more of the possible alternative recipients; and selecting one or more alternative recipients from the set of possible alternative recipients based on the additional information relating to one or more of the possible alternative recipients.

Preferably the step of sending the message and forwarding instructions comprises the steps of: sending a request to receive a message for forwarding to the second party to the alternative recipient; receiving an acknowledgement from the alternative recipient; and sending the message to the alternative recipient.

Preferably the method further comprises the step of: if the acknowledgement is not received, sending a request to a second alternative recipient.

Preferably the message for the second party comprises a request to initiate communications with the first party.

Preferably the message is encapsulated such that it can only be read by the second party.

Preferably the message is encapsulated such that it can be de-encapsulated by means of a password or is encapsulated by encryption.

Preferably the data source is a calendar service and the additional information comprises calendar information.

Preferably the data source is a location service and the additional information comprises location information.

Preferably the method further comprises the step of: receiving the message from the first party.

Preferably the method further comprises the step of: converting the format of the message received from the first party before sending the converted format message to the second party.

Preferably the method further comprises the step of: at a device associated with the alternative recipient, forwarding the message on to a portable device associated with the second party.

Preferably the method further comprises the steps of: at a presence service element, determining if the first party has permission to access presence information; and if the first party is determined to have permission to access presence information, providing the presence information.

Preferably the method further comprises the steps of: at the data source, determining if the first party has permission to access the additional information; and if the first party is determined to have permission to access the additional information, permitting access to the additional information.

A second aspect provides a computer program comprising computer program code means adapted to perform all the steps of any of the methods described above when said program is run on a computer.

Preferably the computer program is embodied on a computer readable medium.

A third aspect provides apparatus for sending a message from a first party, the message being destined for a second party, the apparatus comprising: means for obtaining presence information relating to the second party; means for accessing one or more data sources containing additional information associated with second party; means for determining an alternative recipient for the message based on the additional information; means for automatically generating instructions for forwarding the message from the alternative recipient to the second party; means for encapsulating the message; and means for sending the encapsulated message and the forwarding instructions to the alternative recipient, wherein the forwarding instructions include information to enable the second party to de-encapsulate the message.

A fourth aspect provides a method of passing a message from a first party to a second party comprising the steps of: receiving a message from the first party, the message comprising an encapsulated message content and forwarding instructions; identifying from the forwarding instructions that the second party is an intended recipient of the message content; and forwarding the encapsulated message content to the second party.

Preferably the step of forwarding the encapsulated message content comprises the steps of: requesting an identifier from the second party; de-encapsulating the message content on receipt of an identifier associated with the second party; and providing the de-encapsulated message content to the second party.

Preferably the identifier comprises one of a password, a pin number, biometric information and an encryption key,

A fifth aspect provides a communications device comprising: means for receiving a message from the first party, the message comprising an encapsulated message content and forwarding instructions; means for identifying from the forwarding instructions that the second party is an intended recipient of the message content; and means for forwarding the encapsulated message content to the second party.

Preferably the means for forwarding comprises: means for requesting an identifier from the second party; means for de-encapsulating the message content on receipt of an identifier associated with the second party; and means for providing the de-encapsulated message content to the second party.

The methods may be performed by firmware or software in machine readable form on a storage medium.

This acknowledges that firmware and software can be valuable, separately tradable commodities. It is intended to encompass software, which runs on or controls "dumb" or standard hardware, to carry out the desired functions. For similar reasons, it is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a schematic diagram of a communications network;
Figure 2 is a schematic diagram of another communications network;
Figure 3 is a flow chart showing an example of operation of the network of figure 2;
Figure 4A is a flow chart showing one of the steps from the flow chart of figure 3 in more detail;
Figure 4B is a flow chart showing one of the steps from the flow chart of figure 3 in more detail;
Figure 4C is a schematic diagram of a user device;
Figures 5A and 5B are a flow chart showing another example of operation of the network of figure 2;
Figure 6 shows an example message flow; and
Figure 7 is a schematic diagram of a communications network and a user device.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved.

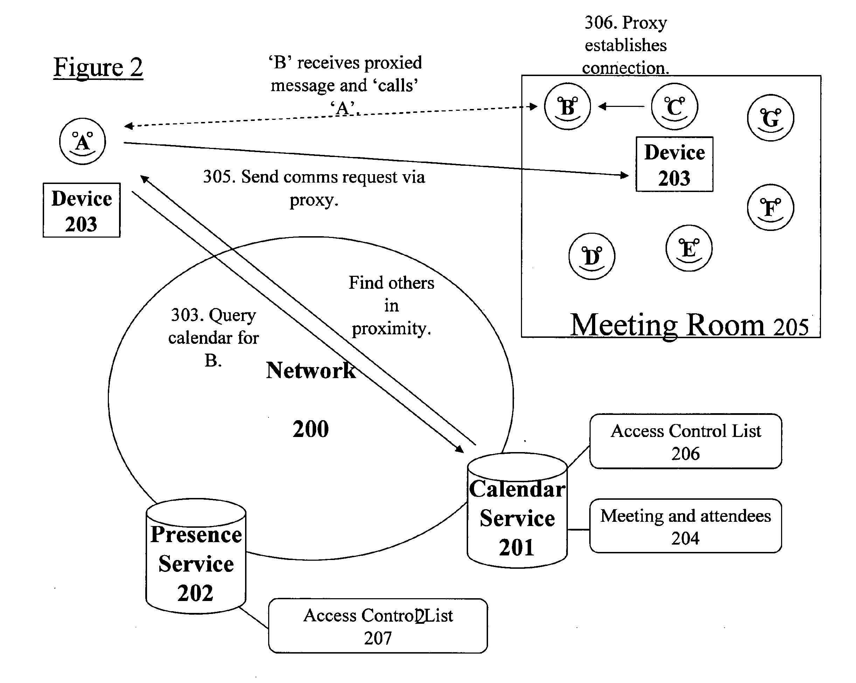

Figure 2 shows a schematic diagram of a communications network 200, which may comprise many networks which may use different technologies, e.g. the Internet, IP (Internet Protocol) networks, wireless local area networks (WLANs), WiFi networks, cellular mobile networks etc. Within the network 200 are many network elements, although only those required to describe the invention are shown in figure 2. Such network elements include a calendar service element 201 and a presence service element 202.

The calendar service element 201 stores calendar information for some or all of the users connected to the communications network 200. Depending on the numbers of users connected to a network, there may be one or more calendar service elements 201 in the network 200. The calendar service element 301 may be an open interface calendar service or may be a web service that receives requests for information and interacts with one or more known calendar applications, such as Microsoft Outlook (trade mark) or Lotus Notes (trade mark).

The presence service element (or presence server) 202 stores presence information about some or all of the users connected to the communications network and again there may be one or more presence service elements in the network.

Figure 2 also shows seven users, A-G, each of whom may have one or more communications devices 203 that are capable of being connected to the communications network 200, although each user may not necessarily be carrying or using a device. The user devices may be fixed devices, such as computers, set top boxes etc, or mobile devices such as mobile telephones, PDAs (personal digital assistants), notebook computers, tablet computers etc, or any other communications device.

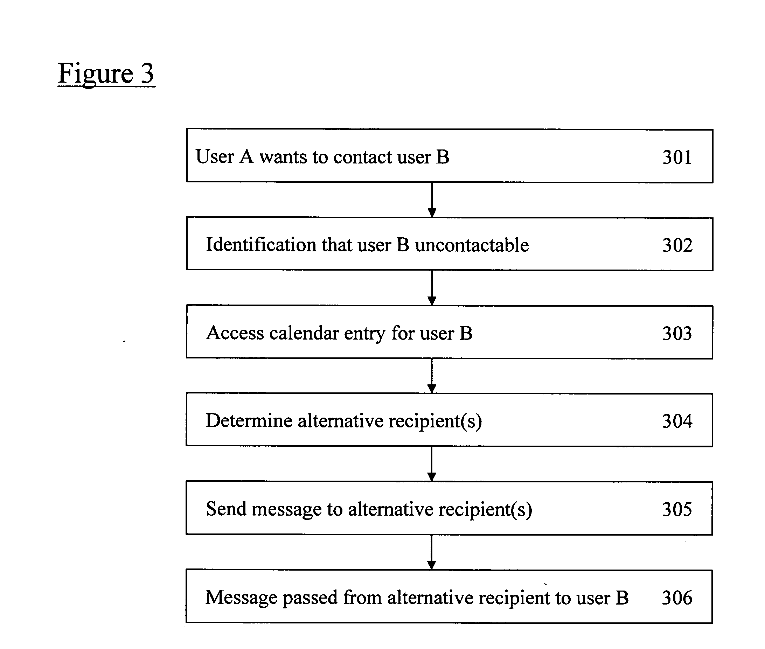

An example of the operation of the arrangement of figure 2 can be described with reference to the flow chart of figure 3.

User A wishes to contact user B (step 301), however it is identified that user B's device is not connected to the network 200 or is otherwise unable to be contacted by user A (step 302). This may be because user B's device has no coverage from the network 200, or due to signal obstruction by buildings, tunnels etc. Alternatively, user B may have switched off his device (inadvertently or on purpose) or the battery may be flat. In another example, user B may not be carrying a mobile communications device and may not be currently using any fixed communications device.

Once it has been identified that user A cannot communicate directly with user B, the calendar service 201 is accessed via user A's device 203 (step 303) and the calendar service is queried about user B. From the calendar information relating to user B, the calendar service can determine which other users are in the geographical vicinity of user B, and in this example the current calendar entry 204 for user B states that he was invited to a meeting (in a meeting room 205) and the other invitees to that meeting were users C-G. The calendar service therefore can respond to user A's device with details of this calendar entry 204 or details of those in the vicinity of user B. From this information one or more possible alternative recipients of a message for user B can be determined (step 304) on the basis of pre-specified rules or criteria. A message can then be sent from user A's device 203 to an alternative recipient, user C (step 305). The message sent to user C contains instructions that the message is for user B and instructions for forwarding the message and therefore user C passes the message on to user B (step 306). The forwarding instructions may be automatically generated and the message for user B may be encapsulated so that it is hidden from the intermediary (user C). The message has now been successfully delivered to the original intended recipient (user B), despite the fact that they could not be contacted directly by the sender (user A), by using a proxy (user C).

User A may be aware of method steps 302-306 occurring at least in part, or in another example user A may not be aware of the process by which a message is being passed to user B (e.g. the process may be carried out by the device and / or network in a manner which is not detectable by user A).

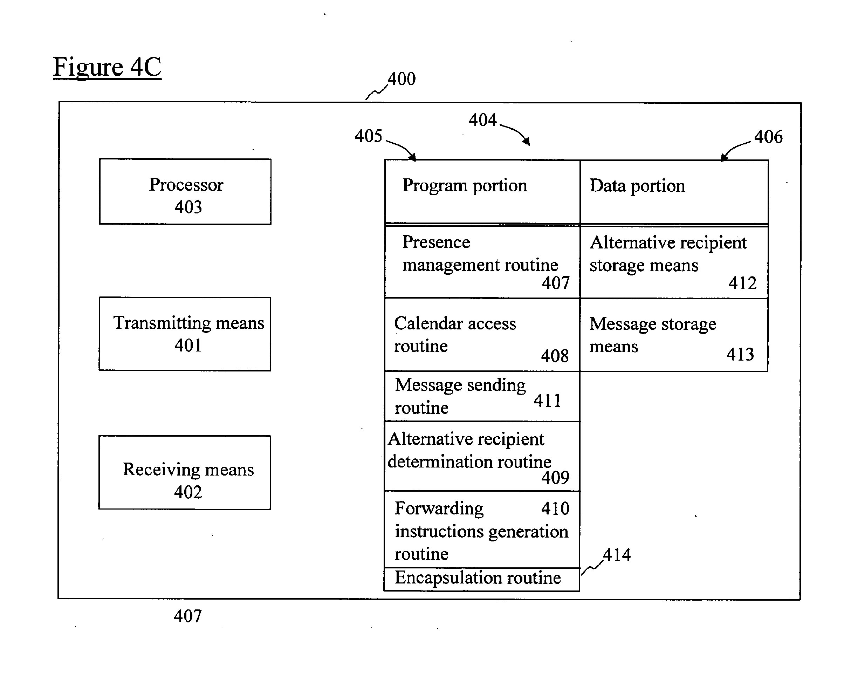

In the examples described herein, method steps 302-305 are described as being performed on user A's device, by way of example only. It will be apparent that the steps could be performed by software or firmware and could in addition or instead be running in the network. This is described in more detail below with reference to figure 4C. The method step 306 may be performed by user C or by software or firmware running on user C's device. The individual method steps are described in more detail below.

The step of identifying that user B's device is not connected to the network or is otherwise uncontactable, (step 302), may be made using presence information obtained from the presence service 202. User A may be able to view presence information relating to user B via a client running on his device 203 or the identification may be made automatically by software / firmware running on user A's device 203 when user A tries to initiate contact with user B. In another example, user A may only identify that he is unable to contact user B when an attempt to contact user B fails, e.g. if user A's device is not capable of providing presence information to user A or if the presence information is unavailable for any reason.

The calendar service may be accessed (in step 303) automatically by software running on user A's device 203 or in the network (which may be accessed by user A's device through a presentation client running on the device 203). The calendar entry for the appropriate time for user B is accessed (i.e. the calendar entry relating to the time at which the access request is made).

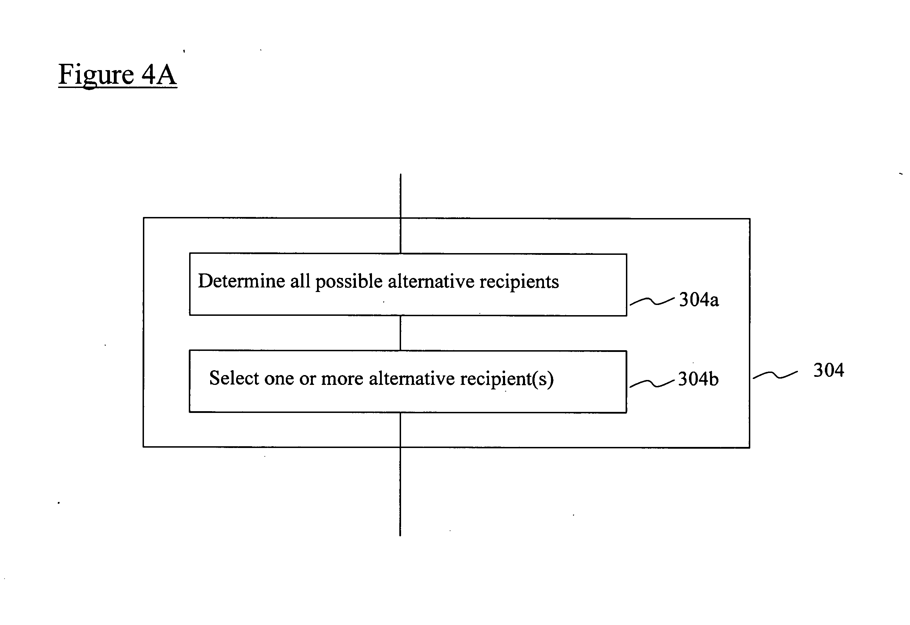

Figure 4A shows the step of determining alternative recipients (step 304) in more detail. From the accessed calendar entry 204, a list of all possible alternative recipients is determined (step 304a), in this example the possible alternative recipients are users C-G who have been invited to the same meeting as user B. From this list of possible alternative recipients, one or more alternative recipients may be selected as the alternative recipients for the message (step 304b), in this example user C is selected. This selection process may be based on criteria such as presence information, location information, whether there is an established relationship with user B, the degree of connection with user B, whether they are known to user A and / or user B etc. These selection criteria are discussed in more detail below.

The description above in relation to figure 4A assumes that the selection of the alternative recipients (step 304b) is performed on user A's device 203. However, this selection could be performed elsewhere in the network.

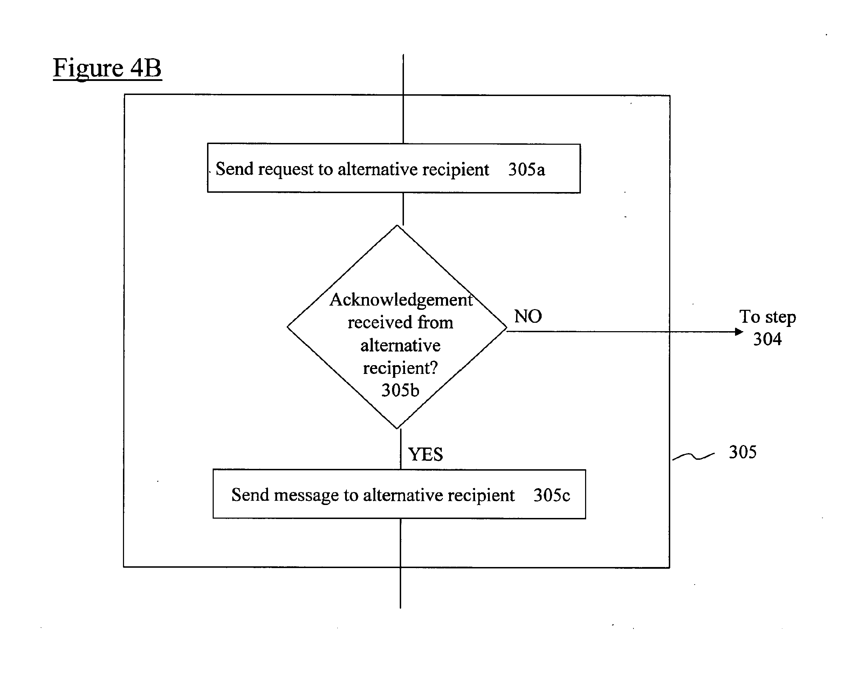

Figure 4B shows an example of the step of sending the message to the alternative recipient (step 305) in more detail. A request is first sent to the alternative recipient, user C, asking if they will agree to receive a message for user B and then pass this message on to user B (step 305a). The request may include details of the action that user C should take to agree to receive the message for user B. If an acknowledgement is received from user C (step 305b), then the message for user B is passed to user C (step 305c). If an acknowledgement is not received from user C, or not received in a specified time period, then a new alternative recipient may be identified (as in step 304 or 304b). In addition to providing user C with the message for user B, user C is also provided with forwarding instructions, which may have been automatically generated. The forwarding instructions are sent either in the initial request (in step 305a) or in the later message (in step 305c).

In another example, the message sent to the alternative recipient (in step 305) may not require an acknowledgement and may include both the request to pass a message to user B and the message for user B itself, e.g. "Please pass this message on to John Smith: Please call your wife urgently at home". Where a message is sent which does not require an acknowledgement, it may be beneficial to set the message to be returned to the sender if the message is not read within a certain period of time. This may alert user A or user A's device to the fact that the message will not have reached user B and another alternative recipient may be selected if required.

The message for user B, which may be sent in response to an acknowledgement (in step 305c) or as part of a message not requiring an acknowledgement, as described above, may be information for user B, such as "Please call your wife at home" or "Please collect me from the station at 19.03". Where the information to be passed to user B is relatively short and not sensitive in nature, this may be a quick and simple method for getting the information from user A to user B. In another example, the message for user B may be a request for user B to call user A, such that the message relates to establishment of a subsequent communication path directly between users A and B. Sending a request to establish direct communications between users A and B in this way may be beneficial where users A and B do not want user C (the alternative recipient) to be involved in any communication (e.g. if the subject matter is personal or confidential etc). It may also be beneficial where user A needs a two way discussion with user B which will be easier in a direct communication rather than continuing to use user C as a proxy in a two-way conversation.

The message for user B may be sent in plain text or may be encapsulated so that only user B can read the message. The encapsulation may be achieved by encrypting or otherwise protecting the message content in a manner which means that it is not accessible or not readable by the intermediary, user C. For example, user B may have to enter a pin number or password on user C's device before the body of the message is visible. Biometric identifiers (fingerprints, iris scans etc) may be used by way of a secure identifier to enable de-encapsulation, where the user equipment has the appropriate input. Technologies such as PGP (Pretty Good Privacy) which uses securely exchanged key pairs, may be used to encrypt the message. Shared keys may be stored in a user's contacts (also known as a user's personal address book) such that the message can be automatically de-encrypted. In another example, the de-encapsulation may occur automatically upon receipt by user B's device and identification may use a cookie or other information stored on user B's device.

Where the message is encapsulated, the forwarding instructions include information which enables the intended recipient, user B or user B's device, to de-encapsulate and hence access the message. This information may comprise two parts, one relating to receiving an input which securely identifies user B and the other relating to how to de-encapsulate the message once the identification has occurred. For example, this information may include instructions or prompts for user B (e.g. "Please enter your password"), or may be in the form of machine readable instructions for user B's device. The information may also include information in machine readable form for user C's device, such that, if for example user B enters a correct password, the message can be de-encapsulated on user C's device and displayed to user B (as described below).

Messages sent to an alternative recipient (user C in this example) may be set to be deleted or to expire after a specified period of time.

The messages or requests sent to the alternative recipient, user C, (in steps 305, 305a, 305c) may be established by any route, e.g. voice call, VolP (voice over IP) call, SIP (Session Initiation Protocol) request, email, SMS, IM message etc. The messages may be sent in real-time (e.g. voice call) or non real-time (e.g. email, SMS). Although it is preferable that the message is sent to user C's device and received by user C's device in the same method and protocol, there may be situations where it is necessary to perform protocol and / or method conversion in the network. For example, if user C's device is only capable of receiving voice calls and the message is sent from user A's device in text form (e.g. as an IM or email message), a text-to-speech engine may be required in the network to convert the message into a format which can be received on user C's device. The text-to-speech engine may be automated or may be a human operator.

The passing of the message from the alternative recipient, user C, to the originally intended recipient, user B, (in step 306) may be performed by user C, e.g. verbally or in writing, or may be performed by user C's device or by a combination of user C and user C's device.

In the situation that the passing of the message is performed by user C, the forwarding instructions may be in the form of a message (e.g. text or audible message) for user C saying "please forward this message on to user B".

Where the message content is hidden from user C by encapsulation, user C's device may provide a message for user C to pass to user B and also a prompt for user B to enter an identifier on user C's device, e.g. "User B, please enter your pin number". On receipt of a correct pin number (or other identifier), the message may be de-encapsulated and displayed to user B.

There may be situations where although user A's device cannot contact user B's device, user C's device can contact user B's device. For example, user B may have a PDA or notebook computer, which although not connected to the network 200 is, however, capable of receiving messages over a short distance (e.g. via Bluetooth, WiFi, ad hoc networking, peer-peer technology etc) from other devices. A message sent from user A's device to user C's device (in steps 305, 305a, 305c) may therefore contain forwarding instructions which can be interpreted by user C's device. These instructions may be to forward the message if possible to user B's device directly and if this is not possible, to display a message to user C so that the message can be passed by user C instead.

Where the message is passed from user C's device to user B's device, user B (or user B's device) may be able to respond to the message or acknowledge receipt of the message by sending a response to user A's device via user C's device.

Figure 4C shows a schematic diagram of a user device 400. The user device 400 comprises transmitting means 401, receiving means 402, a processor 403 and a memory 404. The memory comprises a program storage portion 405 that is used to hold blocks of program code that can be used by the processor 403. The memory 404 also comprises a data storage portion 406. The program storage portion 405 comprises a presence management routine 407, which obtains presence information relating to intended recipients of messages from the presence service 202, a calendar access routine 408, which accesses the calendar service 201, an alternative recipient determination routine 409, a forwarding instructions generating routine 410, a message encapsulation routine 414 and a message sending routine 411. The data storage portion 406 comprises an alternative recipient storage means 412 and a message storage means 413.

In one example, the method steps 302-305 described above may be performed by software or firmware running on user A's device, such that the presence management routine 407 performs method step 302, the calendar access routine 408 performs method step 303, the alternative recipient determination routine 409 performs method step 304 and the message sending routine 411 performs method step 305.

In another example, the presence management routine 407, calendar access routine 408, alternative recipient determination routine 409, and the message sending routine 411 form a software client (e.g. a web browser) which runs on the user device and which communicates with an element in the network which acts as a server and performs the method steps 302-305.

In a further example, the method steps 302-305 described above may be performed by software or firmware running on an element in the network. Such a network element would comprise a processor similar to processor 403 and a memory similar to memory 404, as shown in figure 4C.

The above description referred to calendar entries about meetings by way of example only. The invention is not limited to the business environment but is generally applicable and calendar entries could instead refer to social engagements, appointments etc.

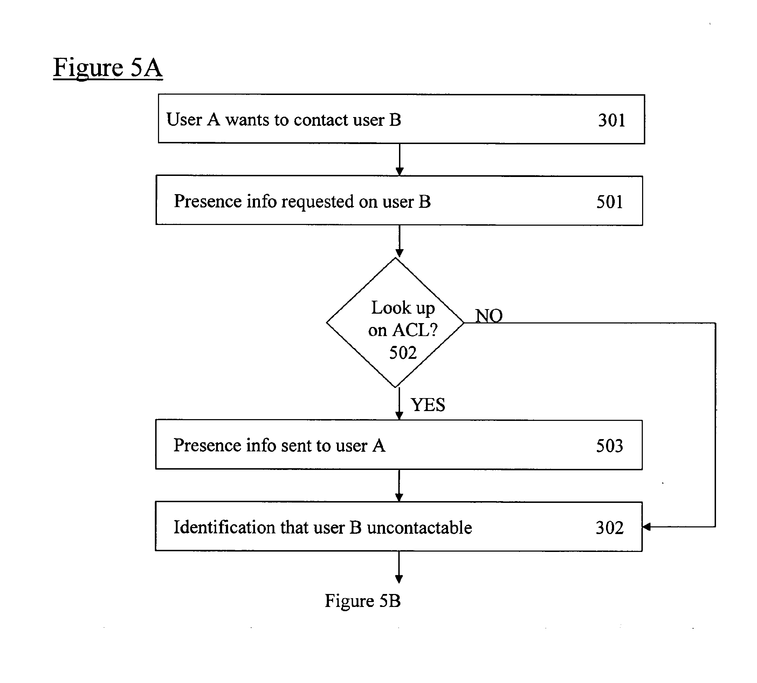

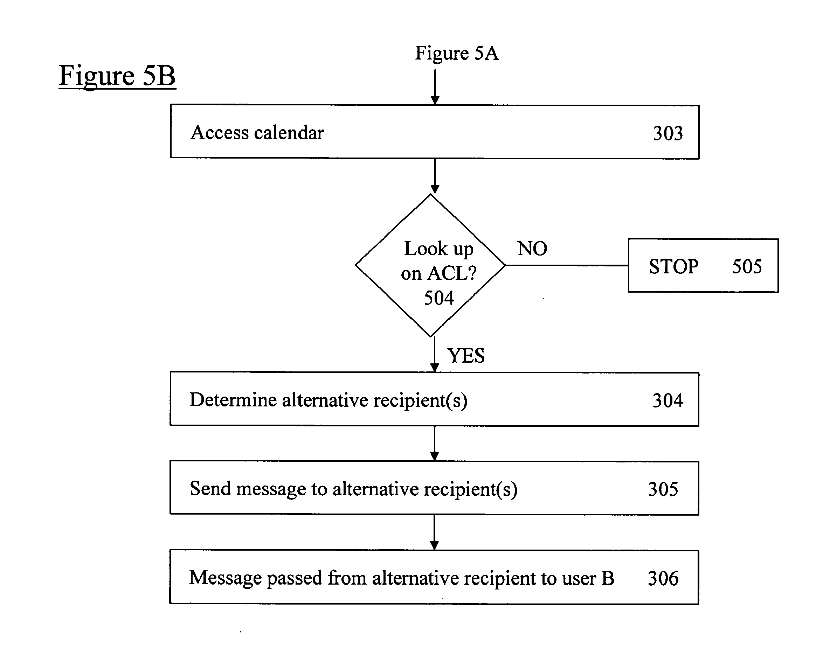

In the examples described above, user A is able to access both presence information and calendar information relating to user B. In some circumstances a user (e.g. user B) may wish to be able to control who has access to their presence and / or calendar information. Such control by the user over their personal information may be implemented using access control lists (ACLs) 206, 207 associated with the calendar service and presence service respectively. The access control lists enable a user to determine who can access their personal information and exactly what personal information can be accessed by particular third parties. Alternatively a trusted agent may be used to share this information between users with the required permissions. Operation of the arrangement of figure 2 when these access control lists are used is described with reference to figures 5A and 5B.

As in the flow diagram shown in figure 3, user A wishes to contact user B (step 301). In order to identify whether user B's device is available, presence information is requested from the presence service 202 by software running on user A's device 203 (step 501). The request for the presence information includes information which identifies user A as the source of the request. The presence service refers to the access control list 207 to determine whether user A has permission to access presence information relating to user B (step 502) and if user A has the required permissions, the presence information is sent to user A's device (step 503). From the presence information, it is identified that user B's device is not connected to the network 200 or is otherwise unable to be contacted by user A (step 302).

As mentioned above, if user A was not permitted to access presence information relating to user B, user A may still be able to determine that user B is not contactable or not connected (in step 302) because if user A initiates a call to user B, this will fail.

Having determined (in step 302) that user B's device cannot be contacted by user A, the calendar service 201 is accessed and queried about user B via user A's device 203 (step 303). The calendar service refers to its access control list 206 to determine whether user A has permission to access calendar information relating to user B (step 504) and if user A has the required permissions, alternative recipients for a message are determined from the calendar information and details are sent to user A's device (step 304). A message can then be sent from user A's device 203 to an alternative recipient, user C (step 305). The message sent to user C contains instructions that the message is for user B and therefore user C passes the message on to user B (step 306).

If user A is found by the calendar service 201 not to be permitted to access user B's calendar information, it will not be possible to determine alternative recipients and the process will stop (step 505).

In order for the above process flow, (shown in figures 5A and 5B), to work, access control lists must be established. There are many possible methods by which access control lists can be established, for example a user may define a list of trusted users or may use their contacts (or personal address book) to automatically define a list of trusted users.

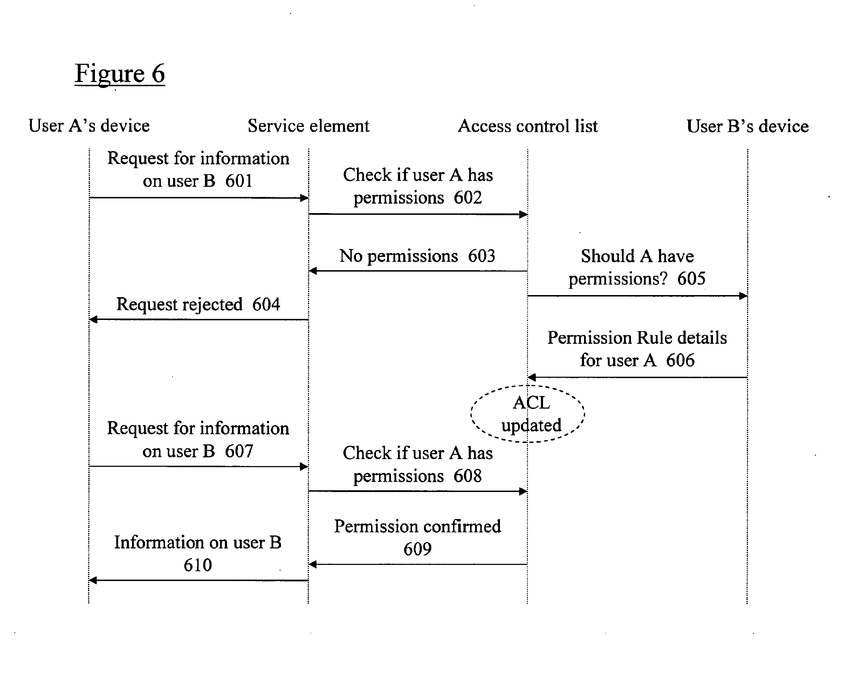

Figure 6 shows an example message flow between user A's device (or other element acting on behalf of user A), a service element (e.g. a calendar service element 201 or a presence service element 202), the associated access control list and another user device, user B's device. The message flow shows how an access control list can be established and / or managed. User A's device sends a request (message 601) to the service element asking for information on user B. The service element checks with the access control list (message 602) to see if user A has permission to access this information and in this example the access control list responds (message 603) that user A does not have the required permission. Consequently, user A's request for information is rejected (message 604). The access control list (or other network element which manages the list, such as a list broker) sends a message 605 to user B's device informing him that user A made a request for information which was refused because user A did not have the required permissions. User B may be not receive this message immediately because they may be uncontactable by the access control list for the same reason that they were uncontactable by user A. When user B receives the message, they can then decide whether, in future, user A should be able to access user B's personal information. User B can set rules relating to the permissions granted to user A, e.g. always allow user A to access information, never allow user A to access information, only allow user A to access information relating to Monday - Friday between 9am and 5pm, only allow user A to access information which is not flagged as private etc. This rule information may be set by user B via buttons on a web page, by responding to a text message, or other technique and the information relating to user A's permissions is sent back to the access control list (message 606) and the access control list is then updated accordingly. Consequently if user B grants user A permissions in response to the query 605 from the access control list, when in the future user A's device again requests information relating to user B (message 607), and the service element checks the permissions with the access control list (message 608), this time user A is confirmed as having the appropriate permissions (message 609). The information requested by user A's device (in message 607) is therefore sent (message 610) to user A's device.

In the discussion above, each user is identified by an identifier in the form of a letter A-G. Such an identifier enables information relating to a user to be correctly stored and accessed. Preferably each user has a unique identifier which is used across all the communication devices owned by a user so that a user, with the identifier 'user A' is still identifiable as user A irrespective of whether they are connected via their mobile phone, PDA, set top box or computer. The identifier may take the form of an employee number in a corporate environment, an email address, a url (uniform resource locator), a subscriber or customer number, a digital identifier or other suitable identifier. Use of a secure identifier which can be traced to a particular user with a high degree of confidence is particularly beneficial when access control measures, such as the access control lists described above, are used to control who has access to a user's personal information. Examples of secure identifiers may include digital identifiers or customer numbers provided by a network operator who may have performed checks on a user before issuing the identifier. Additional authentication methods may also be implemented, such as requiring a user to log on with a password.

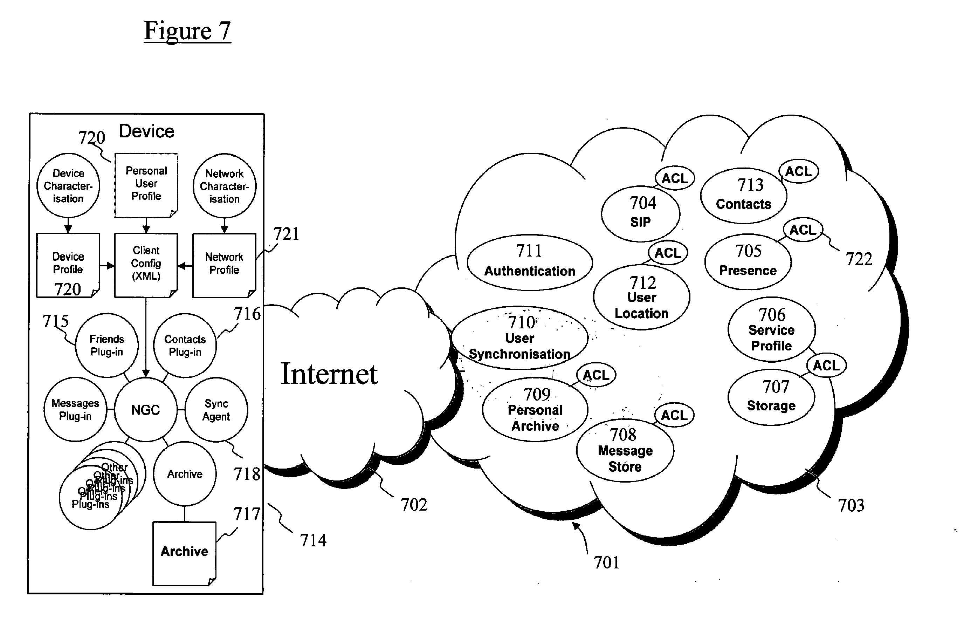

Figure 7 shows a schematic diagram of a communications network 701 and a user device 714. The communications network 701 comprises the internet 702 and an operator network 703. The operator network 703 contains many service elements 704-713 which relate to the operator network 703 and the subscribers of the operator network 703. Users can connect to the operator network, and the service elements contained therein, via the internet 702 or other access network (not shown). Some of the service elements have associated access control lists 722, as described above. Information stored by some or all of the many service elements in the operator network may be used to assist in selecting which of the possible alternative recipients for a message should be used as an alternative recipient for a message (as in step 304b in figure 4).

The information stored in some or all of the service elements in the operator network relating to a user may originate from a user device 714. For example, details from their Contacts stored on the user device 716 may be synchronised with their contacts service element 713 stored in the network. The archive 717 in the device may also be synchronised with the personal archive 709 in the network. This synchronisation process may be managed by the user synchronisation element 710 in the network and the sync agent 718 in the user device. Other information stored in the device 714 may also be used in the selection of an alternative recipient for a message (as in step 304b in figure 4).

As described above, a calendar service element (not shown in figure 7) may be used to determine a list of possible alternative recipients for a message (e.g. users C-G in the example of figure 2). I n some situations, all the possible alternative recipients may be selected as alternative recipients and the message sent to all of them. However, in many situations it is preferable to reduce the list of possible alternative recipients to a small number of alternative recipients (e.g. one or two) or to place the alternative recipients in an order of priority and then contact the alternative recipients sequentially until confirmation is received that the message has been passed successfully to the original intended recipient. Examples of selection criteria, which may be used alone or in combination, are described below.
- Although all the identified possible alternative recipients may have been invitees to a meeting, they may not all have accepted the meeting request. Consequently information from the calendar service element may be used to select only those who accepted the meeting request.
- Not all the identified possible alternative recipients may be contactable by user A. The presence service element 705 may be queried to determine which of the identified possible alternative recipients are able to be contacted by user A.
- The geographically closest possible alternative recipient(s) could be selected using information from the location service element 712 to determine which of the identified possible alternative recipients are closest to the position of user B.
- Historic call data, which may be stored in the personal archive service element 709, may be used to weight each of the identified possible alternative recipients according to whether, and how often user B has previously called or otherwise interacted with the possible alternative recipient. Alternatively or in addition, historic call data relating to user A could be used so that alternative recipients could be selected who have had most interaction in the past with user A and / or user B. The historic data used may not necessarily relate to voice calls but may relate in addition or instead to other forms of communication such as email and instant messenger.
- Information in the personal archive service element 709, or other service element, may be used to determine the degree of connection between user B and each of the possible alternative recipients and to weight the possible alternative recipients accordingly. For example, user B may know user M and user M may know user C, where user C is a possible alternative recipient. User M may also know user N who knows user D, where user D is another possible alternative recipient. According to this, user C would have a higher weighting for selection as an alternative recipient because there is a higher degree of connection between user B and user C than between user B and user D. In a similar manner, the selection could be based on the degree of connection between user A and each of the possible alternative recipients or on a combination of both degrees of connection.
- Where users are part of an organisation, organisation charts may be used to determine which of the possible alternative recipients work most closely with user B. The organisation information may be stored in the storage service element 707, the personal archive service element or elsewhere. Typically, this may be available in a business directory which may also be cached on the user device for off-line access. In a similar manner in family / social situations, a family tree may be used to identify possible alternative recipients most closely related to user B. Possible alternative recipients with the same surname as user B may also be given higher weighting than those with different surnames. Relationship information may also be stored in the contacts (or personal address) book of a user. This information may be stored explicitly in an address book or may be obtainable using key words or other identifiers to search the address book (e.g. husband, wife, Mum, Dad etc).
- Contacts (also referred to as personal address books) may be stored for users in the network based contacts service 713 which uses the synchronisation agent 710 to keep them congruent. This information may be used to select alternative recipients that are known to either or both user A and user B.
- As discussed above, it is preferred to for the alternative recipient, user C, to receive the message in the same protocol and / method that it is sent by user A. Therefore alternative recipients may be selected according to the capabilities of their device 203. Such information may be stored in the service profile service element 706 and this information may originate in the device 714 in the device profile 719, personal user profile 720 and the network profile 721. As discussed above, the user synchronisation service element 710 may be used to synchronise the profile information on the device with the information stored within the network.

Where the service elements are part of an operator network 703, as shown in figure 7, the access control lists (ACLs) may be set in part by the user and in part by the operator such that the operator may only allow users which are subscribers to that operator to access information relating to other subscribers of the network.

Although in figures 2 and 7 the service elements are shown having separate access control lists, there could be a central access control list which is accessible by each of the service elements.

In the above description, the alternative recipient is referred to as user C. However, an alternative recipient need not be another user. The alternative recipient could instead be a communication device that is not associated with a particular user, e.g. a computer in a meeting room, a set-top box in the home etc. In such a situation, it may only be possible for the message to pass from the alternative recipient, e.g. the computer, to user B's device or alternatively the message may be passed directly to user B via a display or audible message.

In the above description the term 'user' is used by way of example only. The sender of the message (user A in the examples above) may be an individual, a group, a community, an automated system or other entity or group of entities which is capable of sending messages to another user. Similarly, the intended recipient (user B) and the alternative recipient (user C) may be an individual, a group, a community, an automated system or other entity or group of entities which is capable of receiving messages from another user.

Although the above description uses the calendar service element to obtain details of possible alternative recipients, other data sources may be used to obtain such details. For example, the user location service element 712 may be used and accessed instead of the calendar service element (e.g. instead of step 303 in figure 3A). To determine possible alternative recipients, the user location service element 712 could be queried to determine which users are in the vicinity of user B. However, it may be beneficial to restrict the query to only those users with a trust relationship with user A and / or user B or only those users who occur in the contacts of user A and / or user B or only those users who have interacted with user A and/or user B. The restriction of the query may be beneficial to reduce the processing load on the user location service element and to reduce the amount of time taken to determine the possible alternative recipients.

In the above description, all messages are described as being handled in the same way, as long as the sender has permission to access the information about the intended recipient (e.g. calendar information). However, in another example, the handing of messages may differ according to specified criteria which may be specified by the intended recipient or by the network operator. For example, different types of messages may be handled differently (e.g. voice messages are re-routed using the methods described above but email messages are not). In another example, the handling of messages may depend on the priority of the message or the sender of the message. For example the sender may specify that a message is high priority and therefore the above methods may be used to ensure that the message does reach the intended recipient, whilst low priority messages may be stored for access by the recipient at a later time. In another example a user may specify which users are considered important and messages from these users are then treated as high priority messages using the methods described above to ensure that a message reaches the recipient.

The methods described above may be particularly beneficial for ad hoc or unplanned communications, especially when the message to be transferred is urgent.

Any range or device value given herein may be extended or altered without losing the effect sought, as will be apparent to the skilled person.

The steps of the methods described herein may be carried out in any suitable order, or simultaneously where appropriate.

Those skilled in the art will appreciate that the method of sending a message effectively forwards the message (or equivalently data) automatically in dependence on presence information relating to the intended recipient to a proxy address which the intended recipient can be locally given permission to access. This "proxy address" will normally belong to another entity who has sufficient access rights to determine that they have provided a "proxy address" for the intended recipient so that the entity can alert the intended recipient to the message they have received on the intended recipient's behalf. Alternatively, in another embodiment of the invention, the intended recipient receives an alert via a medium for which they do have access to the use of the proxy address for a communication message providing information using another communications media (e.g., the user may be texted that they have been sent an email to the email address of the person they have a meeting with).

In further embodiments of the invention, forwarding a received communication is dependent on a level of priority, for example, no forwarding mode is executed for low priority messages, or only high priority messages may be forwarded. In another embodiment of the invention, the intended recipient may select information associated with the message to determine the forwarding mode, e.g., the sender's identity (e.g. the address of the sender, or the sender's telephone calling line identity), and/or header information or message content information can be used to filter the forwarding mode. In this way, for example, if a user is expecting an urgent email from certain sender, all communications from that sender may be forwarded automatically. Alternatively, the sender of the message may mark their communication to be forwarded to a user who has set up a forward facility for messages. This later embodiment enables the sender to control the forwarding mode, and in some embodiments possibly to over-ride any user predetermined forwarding mode settings.

Similarly, the sensitivity settings of a communication can determine the level of encryption to be used when forwarding the communication to what may be a less secure address. The user may also select that certain addresses associated with their presence information are not to be used for forwarding purposes, either generically or if messages meet certain criteria (e.g., sensitivity criteria for confidential communications).

It will be understood that the above description of a preferred embodiment is given by way of example only and that various modifications may be made by those skilled in the art.

## Claims

1. A method of sending a message from a first party, the message being destined for a second party, the method comprising the steps of:
obtaining presence information relating to the second party;
accessing one or more data sources containing additional information associated with second party;
determining an alternative recipient for the message based on the additional information;
automatically generating instructions for forwarding the message from the alternative recipient to the second party;
encapsulating the message; and
sending the encapsulated message and the forwarding instructions to the alternative recipient,
wherein the forwarding instructions include information to enable the second party to de-encapsulate the message.

2. A method according to claim 1, wherein the step of determining an alternative recipient comprises the steps of:
determining a set of possible alternative recipients based on the additional information; and
selecting one or more alternative recipients from the set of possible alternative recipients.

3. A method according to claim 2, wherein the step of selecting one or more alternative recipients is based on at least one of presence information, location information, historic activity records, user device capabilities and user contact information.

4. A method according to claim 2 or 3, wherein the step of selecting one or more alternative recipients comprises the steps of:
accessing a data source containing additional information relating to one or more of the possible alternative recipients; and
selecting one or more alternative recipients from the set of possible alternative recipients based on the additional information relating to one or more of the possible alternative recipients.

5. A method according to any of claims 1-4, wherein the step of sending the message and forwarding instructions comprises the steps of:
sending a request to receive a message for forwarding to the second party to the alternative recipient;
receiving an acknowledgement from the alternative recipient; and
sending the message to the alternative recipient.

6. A method according to claim 5, further comprising the step of:
if the acknowledgement is not received, sending a request to a second alternative recipient.

7. A method according to any of claims 1-6, wherein the message for the second party comprises a request to initiate communications with the first party.

8. A method according to any of claims 1-7, wherein the message is encapsulated such that it can only be read by the second party.

9. A method according to claim 8, wherein the message is encapsulated such that it can be de-encapsulated by means of a password.

10. A method according to claim 8 or 9, wherein the message is encapsulated by encryption.

11. A method according to any of claims 1-10, wherein the data source is a calendar service and the additional information comprises calendar information.

12. A method according to any of claims 1-10, wherein the data source is a location service and the additional information comprises location information.

13. A method according to any of claims 1-12, further comprising the step of:
receiving the message from the first party.

14. A method according to claim 13, further comprising the step of:
converting the format of the message received from the first party before sending the converted format message to the second party.

15. A method according to any of claims 1-14, further comprising the step of:
at a device associated with the alternative recipient, forwarding the message on to a portable device associated with the second party.

16. A method according to any of claims 1-15, further comprising the steps of:
at a presence service element, determining if the first party has permission to access presence information; and
if the first party is determined to have permission to access presence information, providing the presence information.

17. A method according to any of claims 1-16, further comprising the steps of:
at the data source, determining if the first party has permission to access the additional information; and
if the first party is determined to have permission to access the additional information, permitting access to the additional information.

18. A computer program comprising computer program code means adapted to perform all the steps of any of claims 1-14 when said program is run on a computer.

19. A computer program as claimed in claim 18 embodied on a computer readable medium.

20. Apparatus for sending a message from a first party, the message being destined for a second party, the apparatus comprising:
means for obtaining presence information relating to the second party;
means for accessing one or more data sources containing additional information associated with second party;
means for determining an alternative recipient for the message based on the additional information;
means for automatically generating instructions for forwarding the message from the alternative recipient to the second party;
means for encapsulating the message; and
means for sending the encapsulated message and the forwarding instructions to the alternative recipient,
wherein the forwarding instructions include information to enable the second party to de-encapsulate the message.

21. A method of passing a message from a first party to a second party comprising the steps of:
receiving a message from the first party, the message comprising an encapsulated message content and forwarding instructions;
identifying from the forwarding instructions that the second party is an intended recipient of the message content; and
forwarding the encapsulated message content to the second party.

22. A method according to claim 21, wherein the step of forwarding the encapsulated message content comprises the steps of:
requesting an identifier from the second party;
de-encapsulating the message content on receipt of an identifier associated with the second party; and
providing the de-encapsulated message content to the second party.

23. A method according to claim 22, wherein the identifier comprises one of a password, a pin number, biometric information and an encryption key,

24. A communications device comprising:
means for receiving a message from the first party, the message comprising an encapsulated message content and forwarding instructions;
means for identifying from the forwarding instructions that the second party is an intended recipient of the message content; and
means for forwarding the encapsulated message content to the second party.

25. A communications device according to claim 24, wherein the means for forwarding comprises:
means for requesting an identifier from the second party;
means for de-encapsulating the message content on receipt of an identifier associated with the second party; and
means for providing the de-encapsulated message content to the second party.
